(19) **Europäisches Patentamt / European Patent Office / Office européen des brevets**

(11) **EP 2 116 371 B2**

(12) # NEW EUROPEAN PATENT SPECIFICATION
## After opposition procedure

(45) Date of publication and mention
of the opposition decision:
**03.01.2024   Bulletin 2024/01**

(45) Mention of the grant of the patent:
**29.05.2019   Bulletin 2019/22**

(21) Application number: **08711092.0**

(22) Date of filing: **12.02.2008**

(51) International Patent Classification (IPC):
**B32B 27/30** (2006.01)    **B65D 30/02** (2006.01)
**B65D 65/40** (2006.01)    **B32B 7/02** (2019.01)
**B32B 7/12** (2006.01)    **B32B 27/32** (2006.01)
**B32B 27/34** (2006.01)    **B32B 27/08** (2006.01)
**B32B 27/36** (2006.01)

(52) Cooperative Patent Classification (CPC):
**B32B 27/08; B32B 7/12; B32B 27/16; B32B 27/18;**
**B32B 27/22; B32B 27/304; B32B 27/306;**
**B32B 27/308; B32B 27/32; B32B 27/327;**
**B32B 27/34; B32B 27/36;** B32B 2270/00;
B32B 2307/30; B32B 2307/306;    (Cont.)

(86) International application number:
**PCT/JP2008/052228**

(87) International publication number:
**WO 2008/099799 (21.08.2008 Gazette 2008/34)**

(54) **STRETCHED LAMINATED FILM AND BAG**

GESTRECKTE LAMINIERTE FOLIE UND BEUTEL

FILM STRATIFIÉ ÉTIRÉ ET SAC

(84) Designated Contracting States:
**AT BE BG CH CY CZ DE DK EE ES FI FR GB GR**
**HR HU IE IS IT LI LT LU LV MC MT NL NO PL PT**
**RO SE SI SK TR**

(30) Priority:  **14.02.2007   JP 2007033678**

(43) Date of publication of application:
**11.11.2009   Bulletin 2009/46**

(73) Proprietor: **Asahi Kasei Kabushiki Kaisha**
**Tokyo 100-0006 (JP)**

(72) Inventors:
• **KANETA, Yukimasa**
**Tokyo 100-8440 (JP)**
• **KITAGUCHI, Motohiro**
**Tokyo 100-8440 (JP)**
• **TAKAGI, Naoki**
**Tokyo 100-8440 (JP)**

(74) Representative: **D Young & Co LLP**
**120 Holborn**
**London EC1N 2DY (GB)**

(56) References cited:
**EP-A1- 1 842 664**    **EP-A1- 2 030 784**
**EP-A1- 2 116 371**    **EP-A2- 0 042 148**

**EP-A2- 0 287 403**    **WO-A1-00/26024**
**WO-A1-00/26024**    **WO-A1-00/32393**
**WO-A1-91/03518**    **WO-A1-2013/048746**
**JP-A- 8 080 563**    **JP-A- 03 024 954**
**JP-A- 09 039 179**    **JP-A- 09 286 086**
**JP-A- 10 035 720**    **JP-A- 10 035 720**
**JP-A- 58 082 752**    **JP-A- 62 267 331**
**JP-A- 2006 104 629**    **JP-A- 2007 033 678**
**JP-A- 2007 290 740**    **US-A- 2 385 318**
**US-A- 4 892 765**    **US-A- 5 079 051**
**US-A- 5 182 307**

• **JIS K-7121**
• **Chemical Book, 25038-72-6 (polyvinylidene chloride-co-methyl-acrylate)**
• **Maan-shii Steve Wu, Vibrational Spectra and Chain Conformation of Crystalline Poly(vinylidene chloride), thesis in solid state science, The Pennsylvania State University, March 1979, title page and page 25**
• **ExxonMobil product datasheet, Escorene Ultra FL 00206 Ethylene Vinyl Acetate Copolymer Resin, March 20, 2015**
• **Dow technical information, DOWLEXTM 2045 Polyethylene Resin, July 22, 2011**
• **Kuraray, EVALtm EVOH Resins, undated**
• **Polymer Database, Low-Density Polyethylene (LOPE), 2016,**

**(Cont. next page)**

- **Solvay Specialty Polymers, Ixan PVS 801 Polyvinylidene Chloride (PVDC),2019**
- **,Solvay Specialty Polymers, Ixan PVS 802 Polyvinylidene Chloride (PVDC),2019**
- **Solvay Specialty Polymers, Ixan PVS 827 Polyvinylidene Chloride (PVDC),2019**
- **Solvay Specialty Polymers, Ixan PVS 855 Polyvinylidene Chloride (PVDC),2019**
- **Solvay Specialty Polymers, Ixan PVS 856 Polyvinylidene Chloride (PVDC),2019**
- **Solvay Specialty Polymers, Ixan PVS 119 Polyvinylidene Chloride (PVDC), 2019**
- **Solvay Specialty Polymers, Ixan PVS 109 Polyvinylidene Chloride (PVDC),2019**
- **Solvay Specialty Polymers, Ixan PVS 706 Polyvmylidene Chloride (PVDC),undated**
- **R J Crawford and J L Throne, "Rotational Molding Technology", pp 27-28, William Andrew Publishing, 2002,**
- **SolVin S A , IXAN PV 910 Material Datasheet, 10 05 2005**
- **Dow. AFFINITY PL 1280G Technical Data Sheet. Rev 11-01-2012;**
- **Dow. CONPOL 20S2 Product Data Sheet. August 2019:**
- **Solvay. Ixan PV 910 Technical Data Sheet. Rev : 12-04-2017**
- **H Martens and D Goldmann, Recyclingtechnik, Fachbuch fur Lehre und Praxis, 2 Auflage. Springer Vieweg 2016, page 290**
- **J Brandrup and E H Immergut, Polymer handbook, third Ed,, John Wiley & Sons,Inc. 1989, pages VII/379 - VII/407**

- **B S Bernstein et al. "Radiation Crosslinking of Nylon 66 and Poly(vinyl Alcohol)", J. Polym. Sci.. Part A, 1965, 3, pp 3405-3412**
- **JIS K 6796:1998**
- **Experimental Report by F. Segalini and S Fantinati of Innovation Shared Services EMEA on the (lack of) solubility of certain polyesters and polyamides in boiling xylene 17.01 2022.**
- **Indorama Ventures, Technical Datasheet RAMAPET N180 general purpose PET, January2021;**
- **Evomk Resource Efficiency GmbH, technical Information on VESTODUR® polybutylene terephthalate compounds, June 2016;**
- **EMS-GRIVORY, Technical Data Sheet Grilon F 34 NL natural 6030, a polyamide 6, July2009;**
- **BASF SE, Product Information Ultramid C33, July 2015, .**
- **T Oberle, "Process Techniques for Engineering High-Performance Materials", CRC Press, 2014, page 23;**

(52) Cooperative Patent Classification (CPC): (Cont.)
B32B 2307/31; B32B 2307/514; B32B 2307/702; B32B 2307/7244; B32B 2307/736; B32B 2439/06; B32B 2439/46; B32B 2439/70; B32B 2553/00

**Description**

**Technical Field**

The present invention relates to a stretched laminated film and a bag employed therein, which has thermal shrinkablity and a barrier property that allows for effective package processing of meats, processed meats, processed marine products, machine components and the like.

**Background Art**

A stretched laminated film is generally employed in packaging for meats, processed meats, processed marine products, machine components and the like. The stretched laminated film is provided with a usage based function, depending on various properties that each layer has. The properties required in a stretched laminated film employed in a thermal shrinkable package are exemplified as mentioned below.

(1) Thermal shrinkability: is a property by which film is shrunk by heat. It is provided via an easily stretchable layer. When heat is applied to a product vacuum packaged with film having thermal shrinkability via a hot water shower, a blast of hot air, a hot water layer and the like, the film adheres to the contents so that an external appearance of the product is favorable.

(2) Barrier property: is a property by which oxygen and the like are blocked. It is provided via a layer through which oxygen and the like unable to pass. For example, a laminated film with a layer such as an amide resin, saponified ethylene-vinyl acetate copolymer, or a vinylidene chloride copolymer or the like, demonstrates an oxygen barrier property. It allows for the long-term preservation of the contents thereof.

(3) Transparency: is a property by which the degree of film transparency is demonstrated. It is influenced by a difference in thermal shrinkage rate of each film layer. It is an important property with regard to an external appearance of a product.

(4) Heat-sealing property: is a property by which two films are joined together via heating. It is provided via a layer with a low melting temperature. It allows for an opening of a bag formed by film to be closed by the application of heat.

(5) Layered sealing property: is a property by which heated portions of a plurality of bags are layered and heat sealed together at the time that the openings of bags formed by film are heat-sealed, without fusing the bags together. It allows for the number of packaging bags per time unit to be increased.

Patent Documents 1 and 2 disclose an electron beam cross-linked film wherein an ethylene-$\alpha$-olefin copolymer is employed in a surface layer of the film. Although this film is superior in its thermal shrinkability and transparency, it is inferior in its layered sealing property.

Moreover, Patent Documents 3 and 4 disclose a thermal shrinkable laminated film wherein the melting temperature of one surface layer is at least 20°C higher than the melting temperature of another surface layer. They disclose that this film preferably demonstrates burn-through resistance, and is superior in its impulse sealing property. However, problems exist in which the transparency is remarkably poor, and whitening is remarkable when thermal shrinkage is increased.

Patent Documents 5 and 6 disclose a laminated film including one surface layer composed of an aliphatic amide, another surface layer composed of an ultra-low density polyethylene, and a barrier layer. However, naturally whitening does occur or the contents of film are not adhered with sufficient thermal shrinkability in cases where thermally shrank.

Accordingly, it is difficult to actually obtain a film that satisfies all of the abovementioned (1) to (5).

Patent Document 1: JP-T-S64-500180 (Counterpart(s): U.S. 4,863,768, and U.S. 4,985,188);
Patent Document 2: JP-A-H09-039179;
Patent Document 3: JP-T-2002-531288 (Counterpart(s): U.S. 6,627,274);
Patent Document 4: JP-T-2003-523290 (Counterpart(s): U.S. 6,787,220);
Patent Document 5: JP-A-H10-035720; and
Patent Document 6: WO/2000/026024.

JPH0939179 discloses a heat shrinkable cylindrical multilayer film for heat seal packaging irregular food, especially raw or processed meat, comprising 5 layers in the following sequence: an outermost outside resin layer (S1), an adhesive and heat shrinkable resin layer (T1), a polyvinylidene chloride resin layer (C), an adhesive and heat shrinkable resin layer (T2) and a heat sealing layer (S2). (S1) comprises an ethylene-$\alpha$-olefin copolymer having a MP of 115-125°C; (S2) comprises an ethylene-$\alpha$-olefin copolymer having a MP of 94-108°C. The difference in MP between (S1) and (S2) is at least 10°C.

**Disclosure of the Invention**

The present invention aims to provide a stretched laminated film and a bag composed thereof, which is superior in its layered sealing property and transparency, as well as combining the features of thermal shrinkability, a barrier property and a heat-sealing property.

The present inventors achieved the present invention as result of a thorough investigation in order to solve the abovementioned problems. Specifically, the present invention is as described in the appended claims.

A film or bag employed thereby of the present invention is superior in its layered sealing property, and a packaging operation can actually be effectively conducted. Moreover, during thermal shrinkage packaging the packaging can be beautifully conducted with less wrinkles therein, and it allows for packaging with favorable transparency without having any whitening thereof after thermal shrinkage.

**Brief Description of the Drawings**

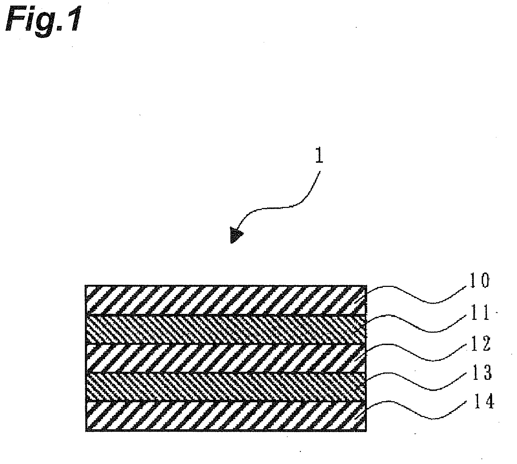

FIG. 1 is a schematic view showing a preferable cross-sectional structure of a stretched laminated film, with a layer in the upper-side of the diagram showing an exterior of a bag, and a surface in the lower-side of the diagram showing an interior of a bag.

Explanation of Symbols

1:  Stretched laminated film
10:  Surface layer
11:  Adhesive layer
12:  Barrier layer
13:  Adhesive layer
14:  Surface layer

**Best Modes for Carrying Out the Invention**

Hereinafter, the embodiments of the present invention will be explained. A stretched laminated film of the present invention has at least four layers of: a first surface layer, an adhesive layer, a barrier layer, and a second surface layer sequentially laminated in order thereof, a melting temperature of the first surface layer that is only increased no less than 65°C to no more than 150°C higher than the melting temperature of the second surface layer, a barrier layer composed of a vinylidene chloride copolymer, and a melting temperature of the barrier layer that is no less than 130°C to less than 160°C.

The first surface layer is on the exterior when processed into a bag and is a layer for maintaining the strength of the laminated film. The resin employed in this layer is a resin with a comparatively high melting temperature. For example, a propylene copolymer, an amide resin, an ester copolymer and the like may be employed. As the ester copolymer, polyethylene terephthalate and polybutylene terephthalate may be exemplified. In particular, an amide resin is preferably employed because of its superiority in heat resistance, its transparency, and its stretchability. As the amide resin, an aliphatic amide resin such as nylon-6 and nylon-12; an aliphatic amide copolymer such as nylon-6,66 and nylon-6,12; and an aliphatic ternary copolymer such as nylon-6,66,12 may be exemplified, with nylon-6,66 being preferable from the standpoint of obtaining a high degree of thermal shrinkability.

The melting temperature of surface layer (A) is preferably from 140°C to 230°C. In the case of an amide resin, the melting temperature (Tm) of the resin is preferably 140°C to 230°C from the standpoint of obtaining the desired thermal contraction stress with a high degree of thermal shrinkability. In particular, a melting temperature of 155°C to 220°C is even more preferable.

In cases where an amide resin is employed as the resin used in the first surface layer, even more favorable stretchability and even more suitable thermal contraction stress are preferably obtained when an amorphous nylon is compounded at 5 wt % to 40 wt %. A surfactant such as glycerine fatty acid ester surfactant, an anti-oxidant, an anti-static agent, a petroleum resin, a mineral oil, a fatty acid amide lubricant, and an anti-blocking agent such as silicon oxide, calcium carbonate and talc may be added where required, so long as the transparency remains uncompromised. The surface may also be covered with a fine powder such as a starch powder, so as to improve releasability during handling as a bag.

The thickness ratio of the first surface layer with respect to all the layers of the film is preferably 0.5% to 20%, more preferably 1% to 15%, and even more preferably 1% to 5% from the standpoint of a high degree of thermal shrinkability and a low degree of thermal contraction stress.

Furthermore, the second surface layer is on the innermost side when processed into a bag, and is a layer forming a heat-sealing layer for sealing a bag. The resin employed in this layer is preferably a resin with a melting temperature in a range of no less than 65°C to no more than 150°C, which is lower than that of the resin employed in the first surface layer. For example, a polyethylene, an ethylene copolymer such as an ethylene-$\alpha$-olefin copolymer and an ethylene-vinyl acetate copolymer, or a mixture thereof may be selected and employed. In particular, an ethylene-$\alpha$-olefin copolymer is preferable because of its superiority in stretchability and heat-sealing property.

The melting temperature of the second surface layer is preferably from 80°C to 130°C. As the ethylene-$\alpha$-olefin copolymer, one that polymerizes using a catalyst, i.e. "a single site catalyst" or "a multi-site catalyst", is favorable. In particular, one that is polymerized by a single site catalyst is preferable from the standpoint of a superior heat-sealing property. Moreover, a copolymer of an ethylene co-monomer, and at least one co-monomer selected from a butene co-monomer, a hexene co-monomer and an octene co-monomer is even more preferable. Furthermore, from the standpoint of the transparency and a heat-sealing property the range of density of the ethylene-$\alpha$-olefin copolymer is preferably 0.88 g/cm$^3$ to 0.92 g/cm$^3$, and more preferably 0.89 g/cm$^3$ to 0.918 g/cm$^3$. In addition, a melt-index value as measured under the measurement conditions (190°C, 21.2 N) stipulated by the measurement conditions of JIS-K-7210 for an ethylene-$\alpha$-olefin copolymer was preferably 0.5 to 7, and more preferably 1 to 4, from the standpoint of thermal shrinkage rate and appropriate thermal contraction stress.

In cases where an ethylene-$\alpha$-olefin copolymer is used as the resin employed by the second surface layer, an ethylene-vinyl acetate copolymer, a high-pressure low-density polyethylene, a petroleum resin, a hydrogenated terpene resin and the like may be compounded within a range of no more than 40 wt %, as an additional resin. Physical properties, such as the flexibility, transparency, and kneadability of a surfactant such as an anti-fogging agent and the like may be provided when compounded with these. From the standpoint of a superior heat-sealing property, the amount of ethylene-$\alpha$-olefin copolymer is preferable no less than 60 wt %. The range of a compounding amount of an additional resin is preferably no less than to 5 wt % to 20 wt %.

In addition, the surfactant such as the glycerine fatty acid ester surfactant, the anti-oxidant, the anti-static agent, the petroleum resin, the mineral oil, the fatty acid amide lubricant, the anti-blocking agent such as silicon oxide, calcium carbonate and talc may be added to the surface layer (B), so long as the sealing property and transparency are not compromised.

The thickness ratio of the second surface layer with respect to all the layers of the film is preferably 5% to 60%, more preferably 10% to 25%, from the standpoint of a heat-sealing property, and a high degree of thermal shrinkability. In cases where there are four layers of film, it is preferably 10% to 60%.

Hereinafter, the meaning of a difference (no less than 65°C to no more than 150°C) between the melting temperature of the first surface layer and the second surface layer will be explained in greater detail. Since the value of the melting temperature (Tm) is the peak value as measured by a differential scanning calorimeter (DSC) in compliance with JIS-K7121, a portion of the resin crystals begin to dissolve even before the temperature reaches the Tm. In some stickiness also occurs. In cases where stickiness has temporarily occurred, fusion between layered film surface layers occurs even before reaching the melting temperature, and they are adhered as a result of sealing pressure. However, even in cases where the difference between the melting temperature of the layers on an exterior and interior is at least 65°C, almost no adherence occurs. In addition, when the difference thereof is at least 100°C adherence does not occur, and the temperature range of heat-sealing (normally the heat-sealing temperature is set so as to be within the abovementioned range for the melting temperature difference) may also be preferably broadened. In such cases, the range of permissible operating temperatures or speeds and the like of the packaging device is broadened.

On the other hand, in cases where the difference in the melting temperature exceeds 150°C, since the melting temperature of the resin employed as a sealing layer at the second surface layer is typically no lower than 80°C, there instances where the melting temperature of that employed as first surface layer exceeds 230°C. However, in cases where the melting temperature exceeds 230°C, there are instances where whitening is seen after thermal shrinkage. When taking into account the viewpoint of ensuring superior transparency by preventing whitening after shrinkage, as well as inhibiting a yellow color change in vinylidene chloride copolymer at the time of co-extrusion, the difference in the melting temperature is preferably no more than 150°C, and no less than 70°C, and more preferably no more than 150°C, and no less than 135°C.

In addition, the barrier layer of the stretched laminated film has the function of preventing oxidation degradation of the contents therein, by having a gas barrier property, specifically an oxygen barrier property. From the perspective of an oxygen barrier property, a vinylidene chloride copolymer is employed in the barrier layer. The vinylidene chloride copolymer is a polymer of vinylidene chloride and an other monomer. As the vinylidene chloride copolymer, a vinylidene chloride-vinyl chloride copolymer or a vinylidene chloride-methyl acrylate copolymer is preferable.

With regard to the oxygen barrier property, although the additive amount of a thermal stabilizer or plasticizer compounded into the resin, or the thickness of the barrier layer and the like are also influenced, the oxygen transmission rate of the resin itself is influenced as well. From the viewpoint of a vinylidene chloride copolymer with a high degree of oxygen barrier property, typically a vinylidene chloride copolymer is selected in which the copolymer ratio of vinylidene chloride co-monomer is high, and the melting temperature thereof is high.

On the other hand, the melting temperature of the barrier layer of the stretched laminated film is no less than 130°C to less than 160°C. The melting temperature (Tm) of vinylidene chloride copolymer when employed in the stretched laminated film of the present invention is preferably no less than 130°C to less than 160°C. Accordingly, it is preferable so that whitening seldom occurs after thermal shrinkage as a result of the difference in the thermal shrinkage rate of the surface layer, degree of haze is reduced, and resin stickiness also seldom occurs, as well as to allow for stable production thereof. The melting temperature (Tm) of the vinylidene chloride copolymer is more preferably no less than 135°C to less than 150°C, and even more preferably no less than 140°C to less than 150°C.

As a factor for controlling the melting temperature of the barrier layer, the copolymer ratio of the co-monomer of the vinylidene chloride copolymer may be exemplified. The melting temperature is reduced via a reduction of the vinylidene chloride content. In cases where a vinylidene chloride-vinyl chloride copolymer is employed as the vinylidene chloride copolymer, the vinyl chloride content is preferably 15 wt % to 40 wt %. More preferably it is more than 19.5 wt % to no more than 34 .5 wt %, even more preferably it is more than 24.5 wt % to no more than 32 wt %, and most preferably it is more than 24.5 wt % to no more than 29.5 wt %. In cases where a vinylidene chloride-methyl acrylate copolymer is employed as the vinylidene chloride copolymer, the methyl acrylate content is preferably 6 wt % to 12 wt %, and more preferably 8 wt % to 11 wt %.

Moreover, a thermal stabilizer or plasticizer may be added in order simplify melt processing and stabilize production, so long as the effects of the present invention are unaffected. It is preferably added within a range of 1 wt % to 10 wt %. The thermal stabilizer or plasticizer has virtually no affect on the melting temperature of vinylidene chloride copolymer. An additive agent as such as epoxidized linseed oil and epoxidized soybean oil may also be employed as the thermal stabilizer and plasticizer. These preferably have an additive content of 2 wt % to 5 wt %. Moreover, lubricant such as a fatty acid amide lubricant, a powder such as silicon oxide, calcium carbonate and talc may also be added to vinylidene chloride copolymer. In particular, it is preferable that 0.005 wt % to 0.3 wt % of talc is added, in order to improve thermal shrinkage, and increase the crystallization rate for the crystal nucleus of the vinylidene chloride copolymer before stretching. The thickness ratio of the barrier layer with respect to all of the layers is preferably 5% to 30%, more preferably 6% to 20%, from the standpoint of a superior oxygen transmission rate.

Furthermore, the first adhesive layer is a layer that joins the first surface layer to the barrier layer, and improves the adhesive strength via the provision of such a layer. Even more remarkably, whitening is inhibited after thermal shrinkage. As the resin capable of being employed in the first adhesive layer an ethylene copolymer may be employed. Preferably, an ethylene-vinyl acetate copolymer, an ethylene-acrylate copolymer, a polyethylene ionomer, an ethylene-ethyl acrylate copolymer, an ethylene-maleic anhydride copolymer and the like, may be employed. In particular, from the standpoint of a favorable interlayer adhesive strength between the first surface layer and the barrier layer, good stretchability, good thermal shrinkability and a good cross-linking property at the time of electron beam irradiation treatment, an ethylene-vinyl acetate copolymer is preferable. Moreover, the ethylene-vinyl acetate copolymer is more preferably one with a vinyl acetate content of 10 wt % to 27 wt %. An additional adhesive layer (A') may also be present, for joining a layer above and below the first adhesive layer. The thickness ratio of the first adhesive layer with respect to the entire film is preferably 5% to 40%, more preferably 10% to 30%, from the standpoint of obtaining stable stretchability.

In addition, the stretched laminated film is capable of providing an second adhesive layer between the barrier layer and the second surface layer. The second adhesive layer also inhibits whitening after thermal shrinkage similarly to the first adhesive layer. The resin that is capable of being employed in the second adhesive layer may also be the same or different as the resin employed in the first adhesive layer. It is preferable that the same resin is employed, as it simplifies production. For example, an ethylene copolymer may be employed. Preferably, an ethylene-vinyl acetate copolymer, an ethylene-acrylate copolymer, a polyethylene ionomer, an ethylene-ethyl acrylate copolymer, an ethylene-maleic anhydride copolymer and the like, may be employed. An additional adhesive layer (B') may also be present, for joining a layer above and below the second adhesive layer. The thickness ratio of the second adhesive layer with respect to the entire film is preferably 5% to 50%, from the standpoint of stretchability or strength. FIG. 1 shows a schematic diagram of a cross-section of a desired layer structure provided with a second adhesive layer.

The stretched laminated film is preferably irradiated with ionizing radiation before being stretched. Accordingly, the stretchability of the film is increased, specifically the first adhesive layer is cross-linked. In order for the vinylidene chloride copolymer to be strongly irradiated and the yellow discoloration to become intense, it is preferable that it is controlled so as not to reach such a layer. The depth of the ionizing radiation effect is typically controlled via acceleration voltage. Ionizing radiation such as $\alpha$-waves, $\beta$-waves, $\gamma$-waves, a neutron beam and an electron beam are irradiated as the ionizing irradiation.

The gel fraction indicates the extent of electron beam cross-linking of each layer. The gel fraction of the first adhesive layer is 25 wt % to 70 wt %, from the standpoint of stretchability. Moreover, from a standpoint of regulating the stretching temperature and ratio, as well as film formation stability, the gel fraction is preferably 30 wt % to 55 wt %. Furthermore, the gel fraction of the first surface layer is preferably 0 wt % to 5 wt %. At least 0% is preferable from a standpoint of bag strength, while no more than 5% is preferable a standpoint of radiation intensity.

The melting temperature of each layer of the stretched laminated film was measured by a differential scanning calorimeter (DSC) in compliance with JIS-K7121. In order that the difference in the melting temperature of the "resin" constituting each layer and the melting temperature of "each layer" of the present invention were barely noticeable, the melting temperature of the "resin" itself was conveniently substituted as the "melting temperature". It is also possible for each layer to be peeled off, the peeled samples to be measured, and the melting temperature thereof to be determined.

As the production method of the stretched laminated film, a single bubble inflation method, a double bubble inflation method, a triple bubble inflation method and a tenter method may be exemplified. However, a double bubble inflation method and a triple bubble inflation method are preferable from the viewpoint of obtaining film with a balance of various physical properties. In particular, the double bubble inflation method will be summarized hereinafter.

First, a pellet shaped resin was fused at a resin melting temperature or greater, and each layer thereof was simultaneously extruded by using a plurality of extruders corresponding to a plurality of layers. It was passed though a polymer tube or die and tube shaped continuously extrusion formed into a laminated film. This was then cooled and solidified via water-cooling. Next, it was irradiated from a first surface layer side with ionizing radiation, and cross-linked at a specific gel-fraction. As the extent of irradiation, it is preferable that the acceleration voltage is 150 kV to 300 kV and the irradiation amount is 20 kGy to 150 kGy from the standpoint of stretchability. More preferably, the acceleration voltage was 150 kV to 250 kV and the irradiation amount is 40 kGy to 100 kGy from the standpoint of color change from irradiation.

Next, the tube shaped film was directed to a stretching process. From a perspective of thermal shrinkage, favorable transparency after shrinkage and production stability, the stretching ratio of the film is preferably such that the stretching is 2 times to 6 times both a machining direction (MD) and transverse direction (TD) thereof. Furthermore, it is more preferably 2.5 times to 4 times. Before stretching it is more preferably pre-heated to 60°C to 98°C, and then stretched.

Stretching by a bubble inflation method is preferable from the standpoint of transparency.

The stretching temperature is the temperature as actually measured by a thermometer of a film surface portion referred to as a "neck portion", which is where inflation bubble stretching begins. The stretching temperature of the stretched laminated film is preferably 50°C to 90°C in order to obtain favorable transparency after shrinkage, thermal shrinkage, and dimensional stability after bag processing. Moreover, it is more preferably conducted at 60°C to 80°C.

In order to prevent curling of the film, which makes it difficult to use when using a continuous bag making device, when slitting, and when bagging, it is preferable that a heat treatment referred to as "heat setting" is conducted for several seconds at s temperature of 40°C to 80°C.

The thickness of the stretched laminated film is preferably 20 μm to 150 μm, and more preferably 25 μm to 80 μm, from the standpoint of a barrier property, bag strength and productivity. The above-described inflation method allows for the film formation of laminated film with varying film thicknesses by altering of the areal stretching power with simultaneous biaxial stretching. Moreover, a surface treatment such as a plasma treatment or a corona treatment, or printing treatment may also be conducted.

In addition, a dust such as a starch powder may also be sprayed on a film inner surface, so that the blocking of both inner surfaces of the film may be prevented, and the bag is easily opened and the contents thereof easily inserted thereinto.

The stretched laminated film has a thermal shrinkage rate (measured at 75°C as mentioned below) of no less than 20% to no more than 50% in both a machine direction (longitudinal direction) and lateral direction (transverse direction) of the film. In such a case, the machine direction of the film refers to the longitudinal direction at the time when the laminated film is being extrusion formed. The thermal shrinkage rate is at least 20% from the perspective of having the body of packaging being tightly and beautifully packaged. The thermal shrinkage rate is no more than 50% from the perspective of transparency. Since a vinylidene chloride copolymer layer with low thermal shrinkage whitens without being able to follow the thermal shrinkage thereof, there are instances where the external appearance of the product is unpleasant. Although the thermal shrinkage rate of the machine direction and lateral direction are not necessarily equal, it is preferable that when the shrinkage difference is no more than 20% depending on the direction that the trimmed portion of the bag is beautiful. The thermal shrinkage rate is preferably no less than 25% to no more than 45% from the perspective of external appearance. In addition, the thermal shrinkage rate is even more preferably no less than 30% to no more than 45%. For example, in cases where the contents thereof are meats it is preferable that they can be preserved for long periods of time. When regulating a thermal shrinkage rate, the stretching temperature and stretching ratio may be optionally controlled.

The total thermal shrinkage rate of the machine direction and the lateral direction is preferably at least 65% from the perspective of having the body of packaging being tightly and beautifully packaged.

The stretched laminated film may be employed as a bag. The stretched laminated film may be employed as a two-sided seal type bag that is generally referred to as a "bottom sealed bag". The above bag is produced by sealing and cutting of one side of a mainly tubular or tube shaped film in a circumferential direction, inserting the contents thereinto, and sealing the opening. Moreover, a bag that is generally referred to as a "side-sealed bag" may also be employed. Conducting a process such as weld-cut sealing on the film produces the abovementioned bag.

Even if the heated portions of a bag in which stretched laminated film has been bag form processed are overlaid and heat-sealed, these bags are not fused together. Thus, packaging of comparatively bulky contents such as block meats may also be effectively performed.

When the packaging body that is vacuum packaged with the stretched laminated film is immersed for several seconds in a hot water bath at 70°C to 90°C, the stretched laminated film undergoes thermal shrinkage leaving the packaging body with a tight beautiful finish. For example, in raw meat packaging increasing the presentation of packaged meats and raising the product value thereof depends on tightly drawn packaging. Moreover, it prevents the accumulation of meat juice or blood, and as a consequence thereof, may also be effective in preventing the decay of the contents therein. In order to increase the product value by maintaining the visibility of the contents along with a beautiful finish, a post-thermal shrinkage film must also demonstrate favorable transparency. Specifically, the degree of haze thereof is preferably no more than 50%, more preferably no more than 40%, and even more preferably no more than 30%.

Examples

Hereinafter the present invention will be explained in greater detail using Examples and Comparative Examples. Moreover, evaluation methods for various physical properties are as mentioned below. Hereinafter, a machine direction (longitudinal direction) from a stretched laminated film extruder machine will be referred to as a MD direction, and a lateral direction (transverse direction) that is orthogonal thereto will be referred to as a TD direction.

(Melting temperature (Tm))

Measurement device: Perkin Elmer Diamond DSC (product name, input-compensation DSC: input-compensation differential scanning calorimeter)

Measurement method: in compliance with JIS-K7121.

Measured temperature: measured by the below-mentioned temperature program.

(i) The temperature was raised from 0°C to 200°C at increments of 10°C/ min, and held at each increment thereof for 1 min;

(ii) the temperature was cooled from 200°C to 0°C at increments of 10°C/min, and held at each increment thereof for 1 min; and

(iii) the temperature was raised from 0°C to 200°C at increments of 10°C/min.

*with regard to resins having a high melting point, the temperature was raised to 250°C.

The melting temperature of the abovementioned (iii) (the second heating) was set as the Tm. Moreover, with regard to resins having a plurality of peaks, the optimal peak was regarded as the Tm. In addition, with regard to amorphous resins that did not have a melting temperature, Tm was the fluidization initiation temperature.

(Evaluation of thermal shrinkage rate at 75°C)

Measured temperature: 75°C

Measurement method: In compliance with ASTM D-2732.

(i) Free thermal shrinkage was performed by marking 100 mm of dashes or dots in the MD and TD, and being immersed for 4 seconds in a warm water bath of 75°C; and

(ii) after shrinkage, the intervals between the marks were measured, and the thermal shrinkage rate of the film was determined by the following equation.

$$\text{The thermal shrinkage rate (\%) at 75°C} = ((100(\text{mm}) - \text{post-shrinkage dimensions (mm)}) / 100 \ (\text{mm})) \times 100$$

(Degree of haze after thermal shrinkage)

Measurement device: Nippon Denshoku Industries Co., Ltd., NDH 2000 Haze meter (Haze meter, product name) Measurement method: in compliance with ASTM D-1003. Free thermal shrinkage was performed by immersing the sample for 4 seconds in a warm water bath of 75°C. The degree of haze thereof was measured. The smaller the value thereof the higher the transparency.

(Evaluation of gel fraction)

It was used as a scale for the degree of cross-linking of a layer.
Measurement sample: each layer was peeled or scrapped and used as the test sample.
Measurement method: about 100 mg of the test sample was placed inside a bag of folded 150 mesh stainless steel netting, extracted for 12 hours within boiling p-xylene, and the ratio of insoluble matter was determined by the below-mentioned equation.

$$\text{Gel fraction (wt \%)} = (\text{sample weight after extraction} / \text{sample weight before extraction}) \times 100$$

(Evaluation of oxygen barrier property)

Measurement device: Oxygen transmission analysis device, manufactured by Mocon (OX-TRAN (registered trademark) 200H)
Measurement conditions: RH of 65%, and temperature of 23°C

The oxygen barrier property was evaluated by measuring the oxygen transmission rate value after three hours from the measurement starting. The oxygen barrier property is large so that the oxygen transmission rate ($cc/m^2/day$) is small.

(Evaluation of layered sealing property of bag)

Measurement device: vacuum packaging machine for large-sized meats "FVM-WM" manufactured by Furukawa Mfg. Co., Ltd.

Sealing temperature: 140°C to 150°C
Sealing time: 2 seconds
Cooling time: 2 seconds

The portions of two bags where heat-sealing was conducted were layered and simultaneously heat-sealed, and it was confirmed whether or not the layered portions of the bag were fused or adhered. The test was repeated 10 times, and the number of times the above portion was fused or adhered was indicated. However, fusion here refers to a condition in which the outer layers of the bag are sealed to each other, and cannot be peeled apart. Adherence refers to condition in which the outer layers stick to each other, and a portion of the sealed portion can be peeled apart.

Examples 1-25, and Comparative Examples 1-12 (Examples 1 to 4 and 6 to 25 do not form part of the invention)

The stretched layered film was produced via a double bubble inflation method employing a plurality of extruders required in accordance with a plurality of layers, and using the resins indicated in each of Tables 1-6 which relate to Examples 1-25, and Tables 7-9, which relate to Comparative Examples 1-12.
The ethylene-$\alpha$-olefin copolymer employed in Examples 3, 9, 23, 25 and Comparative Examples 1, 3, 5, 8 and 9 is an ethylene-butene copolymer (density: 0.900 $g/cm^3$, melting point: 115°C, melt-index: 0.7 g/10 min). The ethylene-$\alpha$-olefin copolymer employed in Examples 1, 2, 5-8, 10, 11, 13, 14, 16, 17, 20-22, 24 and Comparative Examples 2, 6, 10-12 is an ethylene-hexene copolymer (density: 0.904 $g/cm^3$, melting point: 87°C, melt-index: 2.5 g/10 min). Example 15 and Comparative Example 3 employed a mixture of 38 wt % of an ethylene-hexene copolymer (density: 0.900 $g/cm^3$, melting point: 95°C, melt-index: 4 g/10 min) and 60 wt % of an ethylene-hexene copolymer (density: 0.904 $g/cm^3$, melting

point: 87°C, melt-index: 2.5 g/10 min). The ethylene-α-olefin copolymer employed in Comparative Examples 4 and 7 is an ethylene-hexene copolymer (density: 0.900 g/cm$^3$, melting point: 95°C, melt-index: 4 g/10 min). The ethylene-α-olefin copolymer employed in Example 4 and Comparative Example 4 is an ethylene-octene copolymer (density: 0.912 g/cm$^3$, melting point: 123°C, melt-index: 1 g/10 min). Comparative Example 6 employed a mixture of 38 wt % of an ethylene-hexene copolymer (density: 0.930 g/cm$^3$, melting point: 121°C, melt-index: 2 g/10 min) and 60 wt % of an ethylene-hexene copolymer (density: 0.900 g/cm$^3$, melting point: 95°C, melt index: 4 g/10 min).

Moreover, among the resin compositions of Tables 1 to 9 other than that of Example 13, each of the layers of the resin composition as indicated from the top are: a first surface layer, a first adhesive layer, a barrier layer, a second adhesive layer and a second surface layer; and with regard to Example 13, each of the layers of the resin composition as indicated from the top are: a first surface layer, an adhesive layer (A'), a first adhesive layer, a barrier layer, a second adhesive layer, an adhesive layer (B') and a second surface layer. Furthermore, the additive for the vinylidene chloride copolymer was preliminarily compounded so as to have 1.0 wt % of expoxidized linseed oil, 3.0 wt % dibutyl sebacate (DBS), and 0.01 wt % of talc.

An extruder was provided with 4 to 6 temperature control blocks, and the temperature was set in order from a direction of a feed hopper, to a head, to an adapter. The extruder extruding the first surface layer was set at 220°C, 230°C, 240°C, and 250°C. Similarly, the extruder extruding the adhesive layer and the second surface layer was set at 150°C, 160°C, 170°C, 180°C, 190°C, and 190°C; and the extruder extruding the barrier layer was set at 150°C, 160°C, 170°C, and 170°C. The temperature setting of the die was 230°C.

A laminated tube was melt extruded from the extruder. An unstretched tube (hereinafter, referred to as "parison") was obtained while uniformly cooling with water by using a water-cooled ring. During extrusion, each extrusion amount thereof was adjusted so as to have the thickness ratio of the layers indicated in Tables 1 to 9. Specifically, sampling was conducted from eight locations at equal intervals along a straight line in the transverse direction of the film, the thickness of each layer was measured via microscopic observation of a cross-section thereof, and the average values of the eight locations were calculated.

Irradiation induced cross-linking in the obtained unstretched tube was performed by controlling the dose of electron beam irradiation so to have a predetermined gel fraction with an acceleration voltage of 210 kV. Next, the irradiated unstretched tube was blown into a bubble by preliminarily heating it to 80°C, and then applying heat (heat controlled with the temperature of the neck vicinity in the range of 60°C to 100°C) with a five stage infrared heater to a stretched portion. The tube that was blown into a bubble was folded by being deflated while cooled by an air-cooled ring.

The folded film was heat set by passing through two heated rolls of 70°C, and cooled by passing through a cooled roll. The film was wound up while being flattened with a wrinkle-removing roll. The thickness of the stretched laminated film was measured at this time, and regulated by the parsion thickness so as to have a predetermined thickness. However, in some instances the stretching stability was controlled by the stretching ratio. Furthermore, with regard to the stretching ratio of the film, the stretching ratio of the MD was manifested as the velocity between the winder roll and the pinch roll pinched between the stretched portion, and the stretching ratio of the TD was manifested as a value calculated by dividing the width of the film by the width of the parison folds.

A bag (300 mm bag width, and 400 m bag height) was obtained by bottom sealing this stretched laminated film with a bag-making machine. The following evaluations were conducted on each of these bags: evaluation of thermal shrinkage rate at 75°C, degree of haze after thermal shrinkage, evaluation of the oxygen barrier property, and evaluation of layered sealing property of bag.

From the results of Examples 1-24 and Comparative Examples 1-12, it was found that when the melting temperature of the first surface layer was only increased no less than 65°C to no more than 150°C higher than the melting temperature of the second surface layer, the layered sealing property was favorable. Moreover, when the thermal shrinkage at a temperature of 75°C in both the machine direction and the transverse direction of the film was no less than 20% to no more than 50%, it was found that the packaging body was drawn and packaged tightly and beautifully.

From the results of Examples 1-24 and Comparative Examples 2, 5, 8 and 9, it was found that when the melting temperature of the barrier layer was below 160°C, the thermal shrinkage rate at 75°C, or the degree of haze after thermal shrinkage was favorable. Moreover, it was found that a melting temperature of no more than 150°C was even more preferable. On the other hand, when the melting temperature exceeded 160°C, it was found that whitening occurred and the degree of haze was increased.

## Table 1

| Example | Resin composition releasability | Melting temperature °C | Exterior/interior difference in resin melting temperature | Layer ratio % | Stretching power MD × TD | Thickness μm | Thermal shrinkage rate % MD/TD | Degree of haze % | Oxygen barrier property cc/m²/day | Layered sealing property fusion/adherence |
|---|---|---|---|---|---|---|---|---|---|---|
| Example 1 | Nylon-6,66 copolymer + erucamide 0.10 wt %...gel fraction 0% | 192 | | 3 | | | | | | |
| | Ethylene-vinyl acetate copolymer (VAc 18%) ...gel fraction 52% | | | 30 | | | | | | |
| | Vinylidene chloride-vinyl chloride copolymer (72.5/27.5) | 145 | 105 | 15 | 3×3 | 60 | 38/40 | 28 | 25 | 0/0 |
| | Ethylene-vinyl acetate copolymer (VAc 18%) | | | 35 | | | | | | |
| | Ethylene-α-olefin copolymer (density 0.904) | 87 | | 17 | | | | | | |
| Example 2 | Nylon-6 + erucamide 0.10 wt %...gel fraction 0% | 220 | | 3 | | | | | | |
| | Ethylene-vinyl acetate copolymer (VAc 18%) ...gel fraction 50% | | | 30 | | | | | | |
| | Vinylidene chloride-vinyl chloride copolymer (72.5/27.5) | 145 | 133 | 15 | 3×3 | 60 | 36/38 | 28 | 25 | 0/0 |
| | Ethylene-vinyl acetate copolymer (VAc 18%) | | | 35 | | | | | | |
| | Ethylene-α-olefin copolymer (density 0.904) | 87 | | 17 | | | | | | |
| Example 3 | Nylon-6,66 copolymer + erucamide 0.10 wt %...gel fraction 0% | 192 | | 3 | | | | | | |
| | Ethylene-vinyl acetate copolymer (VAc 18%) ...gel fraction 54% | | | 30 | | | | | | |
| | Vinylidene chloride-vinyl chloride copolymer (72.5/27.5) | 145 | 77 | 15 | 3×3 | 60 | 39/40 | 28 | 25 | 0/1 |
| | Ethylene-vinyl acetate copolymer (VAc 18%) | | | 35 | | | | | | |
| | Ethylene-α-olefin copolymer (density 0.900) | 115 | | 17 | | | | | | |
| Example 4 | Nylon-6,66 copolymer + erucamide 0.10 wt % ...gel fraction 0% | 192 | | 3 | | | | | | |
| | Ethylene-vinyl acetate copolymer (VAc 18%) ...gel fraction 52% | | | 30 | | | | | | |
| | Vinylidene chloride-vinyl chloride copolymer (72.5/27.5) | 145 | 69 | 15 | 3×3 | 60 | 27/33 | 38 | 25 | 0/2 |
| | Ethylene-vinyl acetate copolymer (VAc 18%) | | | 35 | | | | | | |
| | Ethylene-α-olefin copolymer (density 0.912) | 123 | | 17 | | | | | | |

## Table 2

| | Resin composition | Melting temperature °C | Exterior/interior difference in resin melting temperature | Layer ratio % | Stretching power MD × TD | Thickness μm | Thermal shrinkage rate % MD/TD | Degree of haze % | Oxygen barrier property cc/m²/day | Layered sealing property fusion/adherence |
|---|---|---|---|---|---|---|---|---|---|---|
| Example 5 | h-Polypropylene resin + erucamide 0.10 wt %...gel fraction 2% | 161 | | 10 | | | | | | |
| | Ethylene-vinyl acetate copolymer (VAc 18%) ...gel fraction 54% | | | 30 | | | | | | |
| | Vinylidene chloride-vinyl chloride copolymer (72.5/27.5) | 145 | 74 | 15 | 3×3 | 60 | 38/38 | 28 | 25 | 0/1 |
| | Ethylene-vinyl acetate copolymer (VAc 18%) | | | 35 | | | | | | |
| | Ethylene-α-olefin copolymer (density 0.904) | 87 | | 10 | | | | | | |
| Example 6 | Nylon-6,66 copolymer + erucamide 0.10 wt %...gel fraction 0% | 192 | | 3 | | | | | | |
| | Ethylene-vinyl acetate copolymer (VAc 18%) ...gel fraction 51% | | | 30 | | | | | | |
| | Vinylidene chloride-vinyl chloride copolymer (78/22) | 155 | 105 | 15 | 3×3 | 60 | 33/35 | 33 | 20 | 0/0 |
| | Ethylene-vinyl acetate copolymer (VAc 18%) | | | 35 | | | | | | |
| | Ethylene-α-olefin copolymer (density 0.904) | 87 | | 17 | | | | | | |
| Example 7 | Nylon-6,66 copolymer + erucamide 0.10 wt %...gel fraction 0% | 192 | | 3 | | | | | | |
| | Ethylene-vinyl acetate copolymer (VAc 18%) ...gel fraction 53% | | | 30 | | | | | | |
| | Vinylidene chloride-vinyl chloride copolymer (80/20) | 159 | 105 | 15 | 3×3 | 60 | 28/32 | 36 | 15 | 0/0 |
| | Ethylene-vinyl acetate copolymer (VAc 18%) | | | 35 | | | | | | |
| | Ethylene-α-olefin copolymer (density 0.904) | 87 | | 17 | | | | | | |
| Example 8 | Nylon-6,66 copolymer + erucamide 0.10 wt %...gel fraction 0% | 192 | | 3 | | | | | | |
| | Ethylene-vinyl acetate copolymer (VAc 18%) ...gel fraction 53% | | | 30 | | | | | | |
| | Vinylidene chloride-vinyl chloride copolymer (70/30) | 135 | 105 | 15 | 3×3 | 60 | 38/40 | 25 | 50 | 0/0 |
| | Ethylene-vinyl acetate copolymer (VAc 18%) | | | 35 | | | | | | |
| | Ethylene-α-olefin copolymer (density 0.904) | 87 | | 17 | | | | | | |
| Example 9 | Nylon-6,66 copolymer + erucamide 0.10 wt %...gel fraction 0% | 192 | | 17 | | | | | | |
| | Ethylene-vinyl acetate copolymer (VAc 15%) ...gel fraction 36% | | | 25 | | | | | | |
| | Vinylidene chloride-vinyl chloride copolymer (72.5/27.5) | 145 | 77 | 13 | 3×4 | 60 | 31/35 | 28 | 22 | 0/1 |
| | Ethylene-vinyl acetate copolymer (VAc 21%) | | | 35 | | | | | | |
| | Ethylene-α-olefin copolymer (density 0.900) | 115 | | 10 | | | | | | |

## Table 3

| | Resin composition | Melting temperature °C | Exterior/interior difference in resin melting temperature | Layer ratio % | Stretching power MD × TD | Thickness μm | Thermal shrinkage rate % MD/TD | Degree of haze % | Oxygen barrier property cc/m²/day | Layered sealing property fusion/adherence |
|---|---|---|---|---|---|---|---|---|---|---|
| Example 10 | Nylon-6,66 copolymer + erucamide 0.10 wt %...gel fraction 0% | 192 | | | | | | | | |
| | Ethylene-vinyl acetate copolymer (VAc 18%) ...gel fraction 49% | | | | | | | | | |
| | Vinylidene chloride-vinyl chloride copolymer (72.5/27.5) | 145 | | 105 | 3×3 | 60 | 38/34 | 28 | 29 | 0/0 |
| | Ethylene-vinyl acetate copolymer (VAc 18%) | | | | | | | | | |
| | Ethylene-α-olefin copolymer (density 0.904) | 87 | | | | | | | | |
| Example 11 | Nylon-6,66 copolymer + erucamide 0.10 wt %...gel fraction 0% | 192 | | | | | | | | |
| | Ethylene-vinyl acetate copolymer (VAc 18%) ...gel fraction 51% | | | | | | | | | |
| | Vinylidene chloride-methyl acrylate copolymer (92/8) | 150 | | 105 | 3×3 | 60 | 34/36 | 31 | 14 | 0/0 |
| | Ethylene-vinyl acetate copolymer (VAc 18%) | | | | | | | | | |
| | Ethylene-α-olefin copolymer (density 0.904) | 87 | | | | | | | | |
| Example 12 | Nylon-6,66 copolymer + erucamide 0.10 wt %...gel fraction 0% | 192 | | | | | | | | |
| | Ethylene-vinyl acetate copolymer (VAc 18%) ...gel fraction 53% | | | 106 | 3×3 | 60 | 42/44 | 37 | 25 | 0/0 |
| | Vinylidene chloride-vinyl chloride copolymer (72.5/27.5) | 145 | | | | | | | | |
| | Ethylene-vinyl acetate copolymer (VAc 18%) | 86 | | | | | | | | |
| Example 13 | Nylon-6,66 copolymer + erucamide 0.10 wt %...gel fraction 0% | 192 | | | | | | | | |
| | Ethylene-vinyl acetate copolymer (VAc 18%) ...gel fraction 60% | | | | | | | | | |
| | Ethylene-vinyl acetate copolymer (Vac 24%) ...gel fraction 45% | | | | | | | | | |
| | Vinylidene chloride-vinyl chloride copolymer (72.5/27.5) | 145 | | 105 | 3×3 | 60 | 40/42 | 35 | 25 | 0/0 |
| | Ethylene-vinyl acetate copolymer (VAc 24%) | | | | | | | | | |
| | Ethylene-vinyl acetate copolymer (VAc 18%) | | | | | | | | | |
| | Ethylene-α-olefin copolymer (density 0.904) | 87 | | | | | | | | |

Layer ratio (%) per layer — Example 10: 8 / 28 / 13 / 34 / 17. Example 11: 3 / 30 / 15 / 17 / 35. Example 12: 3 / 30 / 15 / 52. Example 13: 3 / 15 / 15 / 15 / 15 / 20 / 17.

## Table 4

| | Resin composition | Melting temperature °C | Exterior/interior difference in resin melting temperature | Layer ratio % | Stretching power MD × TD | Thickness μm | Thermal shrinkage rate % MD / TD | Degree of haze % | Oxygen barrier property cc/m²/day | Layered sealing property fusion/adherence |
|---|---|---|---|---|---|---|---|---|---|---|
| Example 14 | Nylon-6,66 copolymer + erucamide 0.10 wt %...gel fraction 0% | 192 | | 3 | | | | | | |
| | Ethylene-vinyl acetate copolymer (VAc 18%) ...gel fraction 52% | | | 30 | | | | | | |
| | Vinylidene chloride-vinyl chloride copolymer (72.5/27.5) | 145 | 105 | 15 | 3×3 | 60 | 33/35 | 22 | 25 | 0/0 |
| | Ethylene-vinyl acetate copolymer (VAc 18%) | | | 35 | | | | | | |
| | Ethylene-α-olefin copolymer (density 0.904) + high-pressure low-density polyethylene (density 0.916) 30 wt % | 87 | | 17 | | | | | | |
| Example 15 | Nylon-6,66 copolymer + erucamide 0.10 wt %...gel fraction 0% | 192 | | 3 | | | | | | |
| | Ethylene-vinyl acetate copolymer (VAc 18%) ...gel fraction 54% | | | 30 | | | | | | |
| | Vinylidene chloride-vinyl chloride copolymer (72.5/27.5) | 145 | 105 | 15 | 3×3 | 60 | 38/40 | 28 | 25 | 0/0 |
| | Ethylene-vinyl acetate copolymer (VAc 18%) | | | 35 | | | | | | |
| | Ethylene-α-olefin copolymer (density 0.900) +ethylene-α-olefin copolymer (density 0.904) 60 wt % | 87 | | 17 | | | | | | |
| Example 16 | Nylon-6,66 copolymer + nylon-6 10 wt % + erucamide 0.10 wt %...gel fraction 0% | 220 | | 3 | | | | | | |
| | Ethylene-vinyl acetate copolymer (VAc 18%) ...gel fraction 52% | | | 30 | | | | | | |
| | Vinylidene chloride-vinyl chloride copolymer (72.5/27.5) | 145 | 133 | 15 | 3×3 | 60 | 37/38 | 28 | 25 | 0/0 |
| | Ethylene-vinyl acetate copolymer (VAc 18%) | | | 35 | | | | | | |
| | Ethylene-α-olefin copolymer (density 0.904) | 87 | | 17 | | | | | | |
| Example 17 | Nylon-6,66 copolymer + amorphous nylon 10 wt % + erucamide 0.10 wt %...gel fraction 0% | 192 | | 3 | | | | | | |
| | Ethylene-vinyl acetate copolymer (VAc 18%) ...gel fraction 50% | | | 30 | | | | | | |
| | Vinylidene chloride-vinyl chloride copolymer (72.5/27.5) | 145 | 105 | 15 | 3×3 | 60 | 37/40 | 24 | 25 | 0/0 |
| | Ethylene-vinyl acetate copolymer (VAc 18%) | | | 35 | | | | | | |
| | Ethylene-α-olefin copolymer (density 0.904) | 87 | | 17 | | | | | | |

## Table 5

| | Resin composition | Melting temperature °C | Exterior/interior difference in resin melting temperature | Layer ratio % | Stretching power MD × TD | Thickness μm | Thermal shrinkage rate % MD / TD | Degree of haze % | Oxygen barrier property cc/m²/day | Layered sealing property fusion/ adhere-nce |
|---|---|---|---|---|---|---|---|---|---|---|
| **Example 18** | Nylon-6,66 copolymer + erucamide 0.10 wt %...gel fraction 0% | 192 | | 3 | | | | | | |
| | Ethylene-vinyl acetate copolymer (Vac 18%) ...gel fraction 53% | | | 30 | | | | | | |
| | Vinylidene chloride-vinyl chloride copolymer (72.5/27.5) | 145 | | 15 | 3×3 | 60 | 39/40 | 38 | 25 | 0/0 |
| | Ethylene-vinyl acetate copolymer (Vac 18%) | | 98 | 35 | | | | | | |
| | Ethylene –methyl acrylate copolymer (density 0.940) | 94 | | 17 | | | | | | |
| **Example 19** | Nylon-6,66 copolymer + erucamide 0.10 wt %...gel fraction 0% | 192 | | 3 | | | | | | |
| | Ethylene-vinyl acetate copolymer (Vac 18%) ...gel fraction 52% | | | 30 | | | | | | |
| | vinylidene chloride-vinyl chloride copolymer (72.5/27.5) | 145 | 96 | 15 | 3×3 | 60 | 39/41 | 37 | 25 | 0/0 |
| | Ethylene-vinyl acetate copolymer (Vac 18%) | | | 35 | | | | | | |
| | Ethylene-ethyl acrylate copolymer (density 0.930) | 96 | | 17 | | | | | | |
| **Example 20** | Polyethylene terephthalate ...gel fraction 0% | 190 | | 3 | | | | | | |
| | Ethylene-vinyl acetate copolymer (Vac 18%) ...gel fraction 50% | | | 30 | | | | | | |
| | Vinylidene chloride-vinyl chloride copolymer (72.5/27.5) | 145 | 108 | 15 | 3×3 | 60 | 33/35 | 35 | 25 | 0/0 |
| | Ethylene-vinyl acetate copolymer (Vac 18%) | | | 35 | | | | | | |
| | Ethylene-α-olefin copolymer (density 0.904) | 87 | | 17 | | | | | | |
| **Example 21** | Nylon-6,66 copolymer + erucamide 0.10 wt %...gel fraction 0% | 192 | | 3 | | | | | | |
| | Ethylene-vinyl acetate copolymer (Vac 18%) ...gel fraction 47% | | | 30 | | | | | | |
| | Vinylidene chloride-vinyl chloride copolymer (72.5/27.5) | 145 | 105 | 15 | 3×3 | 100 | 38/40 | 30 | 5 | 0/0 |
| | Ethylene-vinyl acetate copolymer (Vac 18%) | | | 35 | | | | | | |
| | Ethylene-α-olefin copolymer (density 0.904) | 87 | | 17 | | | | | | |
| **Example 22** | Nylon-6,66 copolymer + erucamide 0.10 wt %...gel fraction 0% | 192 | | 3 | | | | | | |
| | Ethylene-vinyl acetate copolymer (Vac 18%) ...gel fraction 53% | | | 30 | | | | | | |
| | Vinylidene chloride-vinyl chloride copolymer (72.5/27.5) | 145 | 105 | 15 | 3×3 | 40 | 38/40 | 25 | 45 | 0/0 |
| | Ethylene-vinyl acetate copolymer (Vac 18%) | | | 35 | | | | | | |
| | Ethylene-α-olefin copolymer (density 0.904) | 87 | | 17 | | | | | | |

## Table 6

| | Resin composition | Melting temperature °C | Exterior/interior difference in resin melting temperature | Layer ratio % | Stretching power MD × TD | Thickness μm | Thermal shrinkage rate % MD / TD | Degree of haze % | Oxygen barrier property cc/m²/day | Layered sealing property fusion/adherence |
|---|---|---|---|---|---|---|---|---|---|---|
| Example 23 | Nylon-6,66 copolymer + erucamide 0.10 wt %...gel fraction 0% | 192 | | 5 | | | | | | |
| | Ethylene-vinyl acetate copolymer (VAc 18%) ...gel fraction 54% | | | 25 | | | | | | |
| | Vinylidene chloride-vinyl chloride copolymer (83/17) | 145 | 77 | 15 | 3×3 | 60 | 18/19 | 30 | 13 | 0/1 |
| | Ethylene-vinyl acetate copolymer (VAc 18%) | | | 25 | | | | | | |
| | Ethylene-α-olefin copolymer (density 0.900) | 115 | | 30 | | | | | | |
| Example 24 | Nylon-6,66 copolymer + erucamide 0.10 wt %...gel fraction 0% | 192 | | 3 | | | | | | |
| | Ethylene-vinyl acetate copolymer (VAc 18%) ...gel fraction 40% | | | 40 | | | | | | |
| | Vinylidene chloride-vinyl chloride copolymer (72.5/27.5) | 145 | 105 | 5 | 3×4 | 60 | 51/53 | 71 | 50 | 0/0 |
| | Ethylene-vinyl acetate copolymer (VAc 18%) | | | 40 | | | | | | |
| | Ethylene-α-olefin copolymer (density 0.904) | 87 | | 12 | | | | | | |
| Example 25 | Polybutylene terephthalate ...gel fraction 0% | 238 | | 3 | | | | | | |
| | Ethylene-vinyl acetate copolymer (VAc 18%) ...gel fraction 50% | | | 30 | | | | | | |
| | Vinylidene chloride-vinyl chloride copolymer (72.5/27.5) | 145 | 123 | 15 | 3×3 | 60 | 32/34 | 39 | 24 | 0/0 |
| | Ethylene-vinyl acetate copolymer (VAc 18%) | | | 35 | | | | | | |
| | Ethylene-α-olefin copolymer (density 0.900) | 115 | | 17 | | | | | | |

## Table 7

| Resin composition | Melting temperature °C | Exterior/interior difference in resin melting temperature | Layer ratio % | Stretching power MD × TD | Thickness μm | Thermal shrinkage rate % MD/TD | Degree of haze % | Oxygen barrier property cc/m²/day | Layered sealing property fusion/adhere-nce |
|---|---|---|---|---|---|---|---|---|---|
| **Comp. Ex. 1** | | | | | | | | | |
| Ethylene-α-olefin copolymer + erucamide 2.0 wt % (density 0.900) ...gel fraction 25% | 115 | | 8 | | | | | | |
| Ethylene-vinyl acetate copolymer (VAc 18%) ...gel fraction 49% | | | 28 | | | | | | |
| Vinylidene chloride-vinyl chloride copolymer (72.5/27.5) | 145 | 0 | 13 | 3×3 | 60 | 38/44 | 26 | 25 | 10/0 |
| Ethylene-vinyl acetate copolymer (VAc 18%) | | | 34 | | | | | | |
| Ethylene-α-olefin copolymer (density 0.900) | 115 | | 17 | | | | | | |
| **Comp. Ex. 2** | | | | | | | | | |
| Nylon-6,66 copolymer + erucamide 0.10 wt %...gel fraction 0% | 192 | | 3 | | | | | | |
| Ethylene-vinyl acetate copolymer (VAc 18%) ...gel fraction 52% | | | 30 | | | | | | |
| Vinylidene chloride-vinyl chloride copolymer (85/15) | 168 | 105 | 15 | 3×3 | 60 | 28/30 | 45 | 10 | 0/0 |
| Ethylene-vinyl acetate copolymer (VAc 18%) | | | 35 | | | | | | |
| Ethylene-α-olefin copolymer (density 0.904) | 87 | | 17 | | | | | | |
| **Comp. Ex. 3** | | | | | | | | | |
| Ethylene-α-olefin copolymer + erucamide 2.0 wt % (density 0.900) ...gel fraction 25% | 115 | | 8 | | | | | | |
| Ethylene-vinyl acetate copolymer (VAc 18%) ...gel fraction 49% | | | 28 | | | | | | |
| Vinylidene chloride-vinyl chloride copolymer (72.5/27.5) | 145 | 27 | 13 | 3×3 | 60 | 41/48 | 28 | 25 | 0/10 |
| Ethylene-vinyl acetate copolymer (VAc 18%) | | | 34 | | | | | | |
| Ethylene-α-olefin copolymer (density 0.900) + ethylene-α-olefin copolymer (density 0.904) 60 wt % | 87 | | 0 | | | | | | |
| **Comp. Ex. 4** | | | | | | | | | |
| Ethylene-α-olefin copolymer (density 0.912) + erucamide 2.0 wt %...gel fraction 28% | 123 | | 8 | | | | | | |
| Ethylene-vinyl acetate copolymer (VAc 18%) ...gel fraction 49% | | | 28 | | | | | | |
| Vinylidene chloride-vinyl chloride copolymer (80/20) | 159 | 28 | 13 | 3×3 | 60 | 38/40 | 48 | 15 | 0/10 |
| Ethylene-vinyl acetate copolymer (VAc 18%) | | | 34 | | | | | | |
| Ethylene-α-olefin copolymer (density 0.900) | 95 | | 17 | | | | | | |
| **Comp. Ex. 5** | | | | | | | | | |
| Ethylene-α-olefin copolymer (density 0.900) + erucamide 2.0 wt %...gel fraction 24% | 115 | | 17 | | | | | | |
| Ethylene-vinyl acetate copolymer (VAc 15%) ...gel fraction 36% | | | 25 | | | | | | |
| Vinylidene chloride-vinyl chloride copolymer (83/17) | 166 | 0 | 13 | 3×4 | 60 | 33/38 | 15 | 14 | 10/0 |
| Ethylene-vinyl acetate copolymer (VAc 21%) | | | 35 | | | | | | |
| Ethylene-α-olefin copolymer (density 0.900) | 115 | | 10 | | | | | | |

## Table 8

| | Resin composition | Melting temperature °C | Exterior/interior difference in resin melting temperature | Layer ratio % | Stretching power MD × TD | Thickness μm | Thermal shrinkage rate % MD / TD | Degree of haze % | Oxygen barrier property cc/m²/day | Layered sealing property fusion/adherence |
|---|---|---|---|---|---|---|---|---|---|---|
| Comp. Ex. 6 | Ethylene-α-olefin copolymer (density 0.930) + ethylene-α-olefin copolymer (density 0.900) 60 wt % + erucamide 2.0 wt % ...gel fraction 27% | 121 | | 8 | | | | | | |
| | Ethylene-vinyl acetate copolymer (VAc 18%) ...gel fraction 49% | | 34 | 28 | 3×3 | 60 | 33/37 | 15 | 25 | 0/10 |
| | Vinylidene chloride-vinyl chloride copolymer (72.5/27.5) | 145 | | 13 | | | | | | |
| | Ethylene-vinyl acetate copolymer (VAc 18%) | | | 34 | | | | | | |
| | Ethylene-α-olefin copolymer (density 0.904) | 87 | | 17 | | | | | | |
| Comp. Ex. 7 | Polypropylene + polybutylene 25 wt % + erucamide 2.0 wt %...gel fraction 2% | 150 | | 8 | | | | | | |
| | Ethylene-vinyl acetate copolymer (VAc 18%) ...gel fraction 49% | | 55 | 28 | 3×3 | 60 | 35/36 | 69 | 10 | 0/6 |
| | Vinylidene chloride-vinyl chloride copolymer (85/15) | 168 | | 13 | | | | | | |
| | Ethylene-vinyl acetate copolymer (VAc 18%) | | | 34 | | | | | | |
| | Ethylene-α-olefin copolymer (density 0.900) | 95 | | 17 | | | | | | |
| Comp. Ex. 8 | Nylon-6,66 copolymer + erucamide 0.10 wt %...gel fraction 0% | 192 | | 17 | | | | | | |
| | Ethylene-vinyl acetate copolymer (VAc 15%) ...gel fraction 36% | | 77 | 25 | 3×4 | 60 | 29/33 | 64 | 14 | 0/1 |
| | Vinylidene chloride-vinyl chloride copolymer (83/17) | 166 | | 13 | | | | | | |
| | Ethylene-vinyl acetate copolymer (Vac 21%) | | | 35 | | | | | | |
| | Ethylene-α-olefin copolymer (density 0.900) | 115 | | 10 | | | | | | |
| Comp. Ex. 9 | Ethylene-α-olefin copolymer (density 0.900) + erucamide 2.0 wt %...gel fraction 24% | 115 | | 17 | | | | | | |
| | Ethylene-vinyl acetate copolymer (VAc 15%) ...gel fraction 36% | | 0 | 25 | 3×4 | 60 | 35/40 | 12 | 34 | 10/0 |
| | Vinylidene chloride-vinyl chloride copolymer (72.5/27.5) | 145 | | 13 | | | | | | |
| | Ethylene-vinyl acetate copolymer (Vac 21%) | | | 35 | | | | | | |
| | Ethylene-α-olefin copolymer (density 0.900) | 115 | | 10 | | | | | | |
| Comp. Ex. 10 | Nylon-6,66 copolymer + erucamide 0.10 wt %...gel fraction 0% | 192 | | 3 | | | | | | |
| | Ethylene-vinyl acetate copolymer (VAc 18%) ...gel fraction 52% | | 105 | 30 | 3×3 | 60 | 39/43 | 24 | 70 | 0/0 |
| | Vinylidene chloride-vinyl chloride copolymer (65/35) | 129 | | 15 | | | | | | |
| | Ethylene-vinyl acetate copolymer (VAc 18%) | | | 35 | | | | | | |
| | Ethylene-α-olefin copolymer (density 0.904) | 87 | | 17 | | | | | | |

## Table 9

| Resin composition | | Melting temperature °C | Exterior/interior difference in resin melting temperature | Layer ratio % | Stretching power MD × TD | Thickness μm | Thermal shrinkage rate % MD / TD | Degree of haze % | Oxygen barrier property cc/m²/day | Layered sealing property fusion/ adherence |
|---|---|---|---|---|---|---|---|---|---|---|
| Comp. Ex. 11 | Nylon-MXD6 copolymer resin + erucamide 0.10 wt %...gel fraction 0% | 243 | | 3 | | | | | | |
| | Ethylene-vinyl acetate copolymer (VAc 18%) ...gel fraction 52% | | | 30 | | | | | | |
| | Vinylidene chloride-vinyl chloride copolymer (72.5/27.5) | 145 | 156 | 15 | 3×3 | 60 | 28/30 | 74 | 10 | 0/0 |
| | Ethylene-vinyl acetate copolymer (VAc 18%) | | | 35 | | | | | | |
| | Ethylene-α-olefin copolymer (density 0.904) | 87 | | 17 | | | | | | |
| Comp. Ex. 12 | Polypropylene + polybutylene 25 wt % + erucamide 2.0 wt...gel fraction 2% | 150 | | 3 | | | | | | |
| | Ethylene-vinyl acetate copolymer (VAc 18%) ...gel fraction 52% | | | 30 | | | | | | |
| | Vinylidene chloride-vinyl chloride copolymer (72.5/27.5) | 145 | 63 | 15 | 3×3 | 60 | 35/38 | 33 | 31 | 0/5 |
| | Ethylene-vinyl acetate copolymer (VAc 18%) | | | 35 | | | | | | |
| | Ethylene-α-olefin copolymer (density 0.904) | 87 | | 17 | | | | | | |

## Industrial Applicability

The film or bag of the present invention relates to a stretched laminated film and a bag employed therein, which has thermal shrinkability and a barrier property that allows for the effective package processing of meats, processed meats, processed marine products, machine components, and the like. In cases where the packaging is comparatively thick and bulky, it prevents wrinkles from forming in the film and allows for reliably sealed packaging.

## Claims

1. A stretched laminated film (1) comprising at least four layers of: a first surface layer (10), an adhesive layer (11), a barrier layer (12), and a second surface layer (14) sequentially laminated in order thereof, wherein

(1) the melting temperature of the first surface layer (10) is from 65°C to no more than 150°C higher than the melting temperature of the second surface layer (14), and
(2) the barrier layer (12) is composed of a vinylidene chloride copolymer, and the melting temperature of the barrier layer (12) is no less than 130°C to less than 160°C, wherein the melting temperatures are determined in accordance with JIS-K 7121, and
(3) a thermal shrinkage rate in a machine direction and a lateral direction at 75°C are both no less than 20% to no more than 50%, wherein the thermal shrinkage rate is determined in accordance with ASTM D-2732

and wherein the gel fraction of the adhesive layer (11) is 25 wt % to 70 wt %, whereby the gel fraction is determined as follows: about 100 mg of a test sample obtained by peeling or scrapping a layer, was placed inside a bag of folded 150 mesh stainless steel netting, extracted for 12 hours within boiling p-xylene, and the ratio of insoluble matter was determined by the below-mentioned equation:

$$\text{Gel fraction wt \% = sample weight after extraction / sample weight before extraction} \times 100.$$

2. The stretched laminated film (1) according to claim 1, wherein the thickness ratio of the first surface layer (10) with respect to all the layers of the film is 0.5% to 20%.

3. The stretched laminated film (1) according to claim 2, wherein the thickness ratio of the first surface layer (10) with respect to all the layers of the film is 1% to 5%.

4. The stretched laminated film (1) according to claim 1, wherein the melting temperature of the barrier layer (12) is no less than 135°C to less than 150°C, wherein the melting temperature is determined in accordance with JIS-K 7121.

5. The stretched laminated film (1) according to claim 1, wherein the thermal shrinkage rate in the machine direction and the lateral direction at 75°C are both no less than 25% to no more than 45%, and the total of the machine direction and the lateral direction is no less than 65%, wherein the thermal shrinkage rate is determined in accordance with ASTM D-2732.

6. A bag comprising the stretched laminated film (1) according to any one of claims 1 to 5, wherein the first surface layer (10) is distributed on an exterior of the bag.


**Patentansprüche**

1. Gestreckte laminierte Folie (1), umfassend mindestens vier Schichten: eine erste Oberflächenschicht (10), eine Klebeschicht (11), eine Sperrschicht (12) und eine zweite Oberflächenschicht (14), die nacheinander in dieser Reihenfolge laminiert sind, wobei

(1) die Schmelztemperatur der ersten Oberflächenschicht (10) 65 °C bis höchstens 150 °C höher ist als die Schmelztemperatur der zweiten Oberflächenschicht (14), und
(2) die Sperrschicht (12) aus einem Vinyliden-Chlorid-Copolymer besteht und die Schmelztemperatur der Sperrschicht (12) mindestens 130 °C bis weniger als 160 °C beträgt, wobei die Schmelztemperaturen gemäß JIS-K 7121 bestimmt werden, und
(3) eine Geschwindigkeit der thermischen Schrumpfung in sowohl einer Maschinenrichtung als auch einer Seitenrichtung bei 75 °C mindestens 20 % bis höchstens 50 % betragen, wobei die Geschwindigkeit der thermischen Schrumpfung gemäß ASTM D-2732 bestimmt wird,

und wobei die Gelfraktion der Klebeschicht (11) 25 Gew.-% bis 70 Gew.-% beträgt, wobei die Gelfraktion wie folgt bestimmt wird: etwa 100 mg einer Prüfprobe, die durch Abziehen oder Abschaben einer Schicht erhalten wird, wurden in einem Beutel aus gefaltetem 150-Mesh-Edelstahlgeflecht platziert, 12 Stunden in siedendem p-Xylol extrahiert, und das Verhältnis von unlöslicher Materie wurde mit der nachstehend genannten Gleichung bestimmt:

```
Gew.-% der Gelfraktion = Probengewicht nach Extraktion /
Probengewicht vor Extraktion x 100.
```

2. Gestreckte laminierte Folie (1) nach Anspruch 1, wobei das Dickenverhältnis der ersten Oberflächenschicht (10) in Bezug auf alle Schichten der Folie 0,5 % bis 20 % beträgt.

3. Gestreckte laminierte Folie (1) nach Anspruch 2, wobei das Dickenverhältnis der ersten Oberflächenschicht (10) in Bezug auf alle Schichten der Folie 1 % bis 5 % beträgt.

4. Gestreckte laminierte Folie (1) nach Anspruch 1, wobei die Schmelztemperatur der Sperrschicht (12) mindestens 135 °C bis weniger als 150 °C beträgt, wobei die Schmelztemperatur gemäß JIS-K 7121 bestimmt wird.

5. Gestreckte laminierte Folie (1) nach Anspruch 1, wobei die Geschwindigkeit der thermischen Schrumpfung in sowohl der Maschinenrichtung als auch der Seitenrichtung bei 75 °C mindestens 25 % bis höchstens 45 % beträgt und die Gesamtheit der Maschinenrichtung und der Seitenrichtung mindestens 65 % beträgt, wobei die Geschwindigkeit der thermischen Schrumpfung gemäß ASTM D-2732 bestimmt wird.

**6.** Beutel, umfassend die gestreckte laminierte Folie (1) nach einem der Ansprüche 1 bis 5, wobei die erste Oberflächenschicht (10) auf einer Außenseite des Beutels verteilt ist.

## Revendications

**1.** Film stratifié étiré (1) comprenant au moins quatre couches de : une première couche de surface (10), une couche d'adhésif (11), une couche barrière (12) et une deuxième couche de surface (14) stratifiées séquentiellement dans cet ordre,

(1) la température de fusion de la première couche de surface (10) étant de 65 °C à pas plus de 150 °C plus élevée que la température de fusion de la deuxième couche de surface (14), et
(2) la couche barrière (12) étant composée d'un copolymère de chlorure de vinylidène, et la température de fusion de la couche barrière (12) étant non inférieure à 130 °C à moins de 160 °C, les températures de fusion étant déterminées conformément à la norme JIS-K 7121, et
(3) un taux de rétrécissement thermique dans un sens machine et un sens latéral à 75 °C étant tous deux non inférieurs à 20 % à non supérieurs à 50 %, le taux de rétrécissement thermique étant déterminé conformément à la norme ASTM D-2732

et la fraction de gel de la couche d'adhésif (11) étant de 25 % en poids à 70 % en poids, moyennant quoi la fraction de gel est déterminée comme suit : environ 100 mg d'un échantillon de test obtenu par pelage ou déchirage d'une couche, ont été placés dans un sac de treillis d'acier inoxydable de maille 150 plié, extraits pendant 12 heures avec du p-xylène bouillant, et le rapport de matière insoluble a été déterminé par l'équation mentionnée ci-dessous :

```
% en poids de fraction de gel = poids de
l'échantillon après extraction/poids de
l'échantillon avant extraction × 100.
```

**2.** Film stratifié étiré (1) selon la revendication 1, le rapport d'épaisseur de la première couche de surface (10) par rapport à toutes les couches du film étant de 0,5 % à 20 %.

**3.** Film stratifié étiré (1) selon la revendication 2 le rapport d'épaisseur de la première couche de surface (10) par rapport à toutes les couches du film étant de 1 % à 5 %.

**4.** Film stratifié étiré (1) selon la revendication 1, la température de fusion de la couche barrière (12) étant non inférieure à 135 °C à moins de 150 °C, la température de fusion étant déterminée conformément à la norme JIS-K 7121.

**5.** Film stratifié étiré (1) selon la revendication 1, le taux de rétrécissement thermique dans le sens machine et le sens latéral à 75 °C étant tous deux non inférieurs à 25 % à non supérieur à 45 %, et le total du sens machine et du sens latéral étant non inférieur à 65 %, le taux de rétrécissement thermique étant déterminé conformément à la norme ASTM D-2732.

**6.** Sac comprenant le film stratifié étiré (1) selon l'une quelconque des revendications 1 à 5, la première couche de surface (10) étant distribuée sur un extérieur du sac.

## *Fig.1*

**REFERENCES CITED IN THE DESCRIPTION**

**Patent documents cited in the description**

- JP S64500180 T
- US 4863768 A
- US 4985188 A
- JP H09039179 A
- JP 2002531288 T
- US 6627274 B
- JP 2003523290 T
- US 6787220 B
- JP H10035720 A
- WO 2000026024 A
- JP H0939179 B